# EUROPÄISCHE PATENTANMELDUNG

(11) **EP 2 520 408 A1**
(43) Veröffentlichungstag der Anmeldung: **07.11.2012**
(21) Anmeldenummer: 12000148.2
(22) Anmeldetag: 10.01.2012
(51) Int. Cl.: B29C 47/06, B29C 47/00

(54) **In axialer Richtung dauerhaft beliebig verformbares, extrudiertes Kunststoffprofil**

(30) Priorität: 06.05.2011 DE 202011100368 U
(71) Anmelder: Novoplast Schlauchtechnik GmbH, 38820 Halberstadt (DE)
(72) Erfinder: Novoplast Schlauchtechnik GmbH, 38820 Halberstadt (DE)
(74) Vertreter: Klehm, Jörg

(57) **Zusammenfassung**

Zweck der Erfindung ist es, unter Nutzung etablierter, konventioneller Verarbeitungsmethoden für Kunststoffe - in unserem Fall die CoExtrusion - Eigenschaften von Kunstoffen zu vereinen. Hierbei werden mindestens zwei Kunststoffe separat aufgeschmolzen, homogenisiert und in einem Werkzeug zusammengeführt. Die Zeichnung beschreibt einige, mögliche Konturen von extrudierte Profilen, welche mit der Erfindung umgesetzt werden können, jedoch stellt diese keinerlei Einschränkung dar.

Unter Berücksichtigung der resultierenden einzelnen Querschnitte und der dazugehörigen materialspezifischen Festigkeitswerte ist die dauerhafte Verformung eines Stranges in axialer Richtung möglich. Dafür muss über die Auslegung der Teilflächen erreicht werden, dass die Rückstellkraft von Polymer A kleiner ist als die Festigkeit von Polymer B. Dies wird über die Auswahl der Polymere bezüglich der Festigkeit oder aber die Größe der Teilflächen ermöglicht.

## Beschreibung

Mit dem Prozess der Extrusion können nahezu unbegrenzt viele, beliebig ausgeformte Querschnitte realisiert werden. Typische Beispiele sind Dichtlippen, Fensterprofile oder Rohre und Schläuche. Zwei einfache Profile wären beispielsweise ein rundes Vollprofil oder ein Schlauch.

Ebenso groß wie die Vielzahl der Konturen ist auch die Anzahl der möglichen Einsatzzwecke, wobei sich die Auswahl des Kunststoffs zur Herstellung des Profils stets über die mechanischen Eigenschaften als auch die chemische Beständigkeit bestimmt. Ferner erfolgt durch die Kunststoffauswahl die Festlegung von Eigenschaften, wie z. B. das Rückstellverhalten, die Dichte, den E-Modul, die Härte und die Steifigkeit.

Der im Schutzanspruch 1 angegebenen Erfindung liegt das Problem zugrunde, dass ein weiches, flexibles Profil wegen der mangelnden Festigkeit und des Eigengewichts nicht in der Lage ist, seine Form - gerade gestreckt - ohne stützende Elemente (beispielsweise durch das Einziehen von Metalldrähten in die Profilkontur) beizubehalten.

Ferner wird dasselbe Profil, z. B. bei Biegebeanspruchung, zwar eine entsprechende Verformung aufweisen, jedoch nach Entfernen der Last sofort wieder seine ursprüngliche Kontur annehmen¹.

Mit der Erfindung wird erreicht, dass entsprechende Profile zum Einen in axialer Richtung gegen die Verformung durch das Eigengewicht geschützt werden, zum Anderen ist die gezielte, dauerhafte Vergabe einer Kontur in axialer Richtung ohne Einbringung von z. B. Wärmeenergie möglich.

Um diese vorteilhaften Eigenschaften zu realisieren, ist der Einsatz der CoExtrusion notwendig. Hierbei werden zwei Kunststofftypen in einem Werkzeug zusammengeführt. Die Gestaltung der resultierenden Querschnitte ist hierbei individuell festzulegen. Mögliche Konturen sind im Anhang festgehalten².

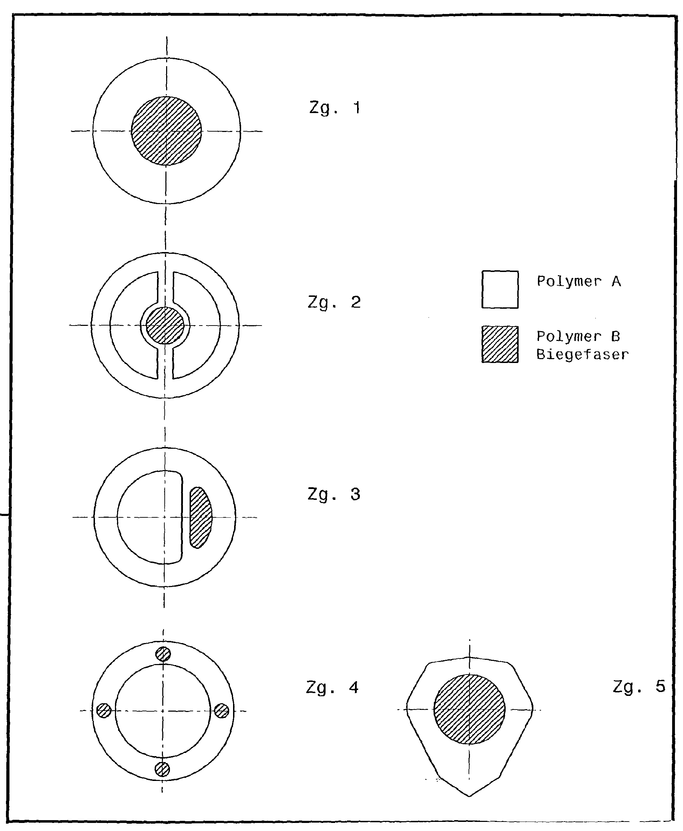

## Patentansprüche

1. Von Hand in axialer Richtung dauerhaft, beliebig verformbares, extrudiertes Profil auf Basis von thermoplastisch verarbeitbaren Kunststoffen,
**dadurch gekennzeichnet,**
**dass** Verformungen durch Eigengewicht entgegengewirkt wird, und beliebige Verformungen zur Erzielung einer spezifischen Kontur in axialer Richtung erzielt werden kann.

2. Profil nach Anspruch 1,
**durch gekennzeichnet,**
**dass** das Produkt per CoExtrusion hergestellt wird.

3. Profil nach Anspruch 1
**Dadurch gekennzeichnet,**
**dass** die Kontur beliebig geartet sein kann

4. Profil nach Anspruch 1
**Dadurch gekennzeichnet,**
**dass** Produktmaße und Aufbauten beliebig sein können

5. Profil nach Anspruch 1
**Dadurch gekennzeichnet,**
**dass** kompatible und inkompatible Materialien verwendet werden können

6. Profil nach Anspruch 1
**Dadurch gekennzeichnet,**
**dass** die Entsorgung des Produkts wesentlich vereinfacht wird, da keine Metallkomponenten enthalten sind. Dem heutigen Stand der Technik entspricht, dass verstärkende Elemente aus andersartigen Werkstoffen (i.d.R. Metalle) bestehen, was eine Entsorgung bzw. Wiederverwertung im z.B. Dualen System verhindert.
